# EUROPÄISCHE PATENTSCHRIFT

(11) **EP 1 944 139 B1**
(45) Veröffentlichungstag und Bekanntmachung des Hinweises auf die Patenterteilung: **21.10.2009**
(21) Anmeldenummer: 07024374.6
(22) Anmeldetag: 17.12.2007
(51) Int. Cl.: B26D 3/24

(54) **Vorrichtung zum Schneiden von Lebensmitteln**
Food cutting device
Dispositif de coupe de produits alimentaires

(30) Priorität: 11.01.2007 DE 102007002249
(43) Veröffentlichungstag der Anmeldung: 16.07.2008
(73) Patentinhaber: Leu Anlagenbau AG, 3661 Uetendorf (CH)
(72) Erfinder: Hänni, Peter, 3634 Thierachern (CH); Zenger, Thomas, 3632 Niederstocken (CH)
(74) Vertreter: Heuckeroth, Volker

(56) Entgegenhaltungen:
- FR-A- 2 228 583

## Beschreibung

Die Erfindung betrifft eine Vorrichtung zum Schneiden von Lebensmitteln, insbesondere zum Schneiden von Käse, mit einer Auflagefläche, auf die zumindest ein Lebensmittel auflegbar ist, mit einer Schneidvorrichtung zum Schneiden des Lebensmittels in Portionsstücke und mit Mitteln zum zentrieren des Lebensmittels.

Eine derartige Vorrichtung ist aus der FR-A-2 228 583 bekannt.

Eine bekannte Vorrichtung wird in der Lebensmittelverarbeitung verwendet, um Lebensmittel, bspw. Käse oder Torten, automatisiert zu schneiden. Insbesondere ist es beim Verarbeiten von Käse möglich, diesen gewichtsgenau bzw. winkelgenau in gleich schwere bzw. gleich große Portionsstücke zu schneiden.

Die bekannte Vorrichtung weist ein Gehäuse mit einer Auflagefläche auf, auf die bspw. ein Käselaib auflegbar ist. Die Auflagefläche kann in Form einer Aufnahme, bspw. eines Teller, ausgebildet sein. Die Vorrichtung weist ferner eine Schneidvorrichtung auf, um den Käselaib in Portionsstücke zu schneiden. Die Schneidvorrichtung weist einen Schneidstern auf, der aus um vorgegebene Winkel versetzt angeordneten Messern oder Drähten gebildet wird. Der Schneidstern wird von oben in die Oberfläche des Käses gedrückt, so dass gleichzeitig alle Portionsstücke geschnitten werden. Der Käselaib kann auch mittels Ultraschall in Portionsstücke zerteilt werden.

Die bekannte Vorrichtung ist entweder zum gewichtsgenauen oder winkelgenauen Schneiden des Käses in Portionsstücke ausgelegt. Um ein gewichtsgenaues Zerteilen eines Käselaibs in gleich schwere Portionsstücke zu gewährleisten, weist die Vorrichtung zusätzlich ein Wiegemittel, bspw. eine Waage, auf.

Ein Nachteil der bekannten Vorrichtung ist ihre konkstruktiv komplexe Bauweise, um ein automatisiertes und schnelles Zerteilen des Käses in Portionsstücke zu ermöglichen. Hierdurch sind hohe betriebliche Kosten für die Anschaffung der Vorrichtung bzw. für eine mögliche Reparatur bedingt.

Ein weiterer Nachteil dieser Vorrichtung ist, dass sie nur auf einen bestimmten Aufgabenbereich, d.h. auf ein gewichtsgenaues oder ein winkelgenaues Zerteilen, und auf eine bestimmte Größe des Käses optimiert ist. Bei einer Änderung des Aufgabenbereichs oder der Käsegröße muss die bekannte Vorrichtung aufwändigst umgebaut werden, wodurch Stillstandszeiten beim Produktionsablauf und folglich zusätzliche Kosten auftreten. Um einen solchen Umbau der bekannten Vorrichtung zu vermeiden, müssen verschiedene Vorrichtungen im Betrieb bereitgestellt werden, wodurch sich die Anschaffungskosten für solche Vorrichtungen signifikant erhöhen.

Es ist ferner nachteilig, dass aufgrund der speziellen Ausgestaltung des Schneidsterns nur eine vorgegebene Anzahl von Portionsstücken geschnitten werden kann. Bei einer Änderung der Anzahl, der Größe bzw. des Gewichts der zu schneidenden Portionsstücke ist es notwendig, den Schneidstern gegen einen anderen auszutauschen, wodurch ebenfalls Stillstandzeiten im Produktionsablauf entstehen, die die Produktionskosten der einzelnen Portionsstücke erhöhen.

Es ist daher eine Aufgabe der Erfindung, eine Vorrichtung der zuletzt genannten Art dahingehend zu verbessern, dass sie ein kostengünstiges Schneiden eines ausreichend fixierten Lebensmittels in Portionsstücke ermöglicht.

Erfindungsgemäß wird die Aufgabe hinsichtlich der eingangs genannten Vorrichtung dadurch gelöst, dass die Vorrichtung eine Zentrier- und Drehvorrichtung aufweist, die zumindest ein Zentrier- und Drehelement aufweist, das derart ausgebildet ist, dass es zumindest teilweise an eine äußere Oberfläche des Lebensmittels oder der Auflagefläche anlegbar und mit ihr in Eingriff bringbar ist, um das Lebensmittel zu zentrieren und schrittweise um eine Drehachse zu drehen.

Die erfindungsgemäße Vorrichtung weist eine Zentrier- und Drehvorrichtung mit zumindest einem Zentrier- und Drehelement auf, das an eine beliebige äußere Oberfläche des Lebensmittels, insbesondere des Käses, oder der Auflagefläche anlegbar und mit dieser in Eingriff bringbar ist. Die äußere Oberfläche kann bspw. eine umfängliche Oberfläche oder eine Deckfläche des Lebensmittels oder der Auflagefläche darstellen. Hierdurch ermöglicht das zumindest eine Zentrier- und Drehelement, dass das Lebensmittels während des gesamten Schneidvorgangs zentriert ist und schrittweise um eine beliebige Drehachse der Vorrichtung gedreht wird, so dass bspw. nach jeder Drehbewegung ein definierter Schnitt ausgeführt werden kann. Erfindungsgemäß ist unter einem "schrittweisen" Drehen des Lebensmittels um die Drehachse eine intermittierende Drehbewegung zu verstehen, wobei die jeweiligen Drehwinkel der einzelnen Drehschritte beliebig sowie zueinander verschieden einstellbar sind und an die jeweiligen Schneideerfordernisse angepasst werden können. Zudem kann die jeweilige Drehgeschwindigkeit der verschiedenen Drehschritte variiert werden. Die erfindungsgemäße Vorrichtung ermöglicht folglich vorteilhafterweise ein exaktes Schneiden des Lebensmittels, da jenes in der Vorrichtung, bspw. auf der Auflagefläche, in einer definierten Position angeordnet und während des gesamten Schneidvorgangs in dieser Position gehalten wird. Hierdurch wird ebenfalls, insbesondere wenn das zumindest eine Zentrier- und Drehelement zumindest teilweise mit der Oberfläche des Lebensmittels in Eingriff gebracht ist, ein Auseinanderfallen bereits geschnittener Portionsstücke sowie eine Deformation des Lebensmittels vermieden, so dass das verbleibende Reststück des Lebensmittels ohne zusätzlichen technischen Aufwand in der vorgegebenen Position bleibt und präzise geschnitten werden kann.

Es ist ferner vorteilhaft, dass das Drehen des Lebensmittels um die Drehachse ein Verwenden einer technisch einfachen Schneidvorrichtung, bspw. eines fest angeordneten Schneidedrahts oder Schneidmessers, anstatt eines auf die Lebensmittelgröße und die Lebensmittelart optimierten Schneidsterns ermöglicht. Hierdurch wird insbesondere ein Austauschen der Schneidvorrichtung vermieden, so dass keine Stillstandzeiten während des Produktionsprozesses entstehen und das Verarbeiten des Lebensmittels kostengünstig erfolgt.

Ein weiterer Vorteil der erfindungsgemäßen Vorrichtung ist, dass die Anzahl und die Größe der zu schneidenden Portionsstücke aufgrund eines schrittweisen Drehens der Auflagefläche bzw. des Lebensmittels variierbar sind, da der jeweilige Drehwinkel auch während des Schneidvorgangs des Lebensmittels angepasst werden kann. Somit kann das Schneiden des Lebensmittels in Portionsstücke flexibel ausgeführt werden, und die Vorrichtung weist einen großen Einsatzbereich auf.

In einer bevorzugten Ausgestaltung ist das zumindest eine Zentrier- und Drehelement durch Formschluss mit der äußeren Oberfläche des Lebensmittels oder der Auflagefläche in Eingriff bringbar.

Diese Maßnahme hat den Vorteil, dass das Lebensmittel besonders gut in eine definierte Stellung gebracht und sein Verrutschen während des Schneidprozesses verhindert wird, da der Formschluss eine sehr gute Kraftübertragung gewährleistet.

In einer weiteren bevorzugten Ausgestaltung ist das zumindest eine Zentrier- und Drehelement durch Reibschluss mit der äußeren Oberfläche des Lebensmittels oder der Auflagefläche in Eingriff bringbar.

Diese Maßnahme bewirkt, dass das Lebensmittel nur durch eine Berührung mit dem zumindest einen Zentrier- und Drehelement auf der Auflagefläche zentriert und gedreht werden kann, wodurch vorteilhafterweise eine äußerliche Beschädigung oder Beeinträchtigung der Oberfläche des Lebensmittels oder der Auflagefläche vermieden wird.

In einer weiteren bevorzugten Ausgestaltung weist das zumindest eine Zentrier- und Drehelement ein flexibles längliches Element auf, das vorzugsweise undehnbar ausgebildet ist.

Diese Maßnahme bewirkt, dass das zumindest eine Zentrier- und Drehelement aufgrund seiner variablen länglichen Form optimal um die äußere Oberfläche verschiedener Lebensmittel oder Auflageflächen anlegbar und an diese anpassbar ist, wodurch die erfindungsgemäße Vorrichtung vorteilhafterweise geeignet ist, Lebensmittel verschiedenster Form, Größe und Beschaffenheit zu schneiden. Ferner bewirkt die undehnbare Ausgestaltung des zumindest einen Zentrier- und Drehelements, dass es in seiner gespannten Form nicht in die äußere Oberfläche des Lebensmittels oder der Auflagefläche eindringen kann, so dass vorteilhafterweise eine Beeinträchtigung des optischen Erscheinungsbildes des Lebensmittels oder eine Beschädigung der äußeren Oberfläche des Auflagefläche während des Verarbeitungsvorgangs vermieden wird. Das längliche Element kann bspw. seilförmig, als Draht oder als Riemen, Gurt oder Band ausgebildet sein.

In einer weiteren bevorzugten Ausgestaltung weist die Zentrier- und Drehvorrichtung zwei Zentrier- und Drehelemente auf, die als Endlosantriebsbänder ausgebildet und in gegenläufigen Umlaufrichtungen bewegbar sind.

Diese Maßnahme hat den Vorteil, dass mittels der zwei Endlosantriebsbänder ein konstruktiv einfacher Zentrier- und Drehmechanismus ermöglicht wird, da die zwei Endlosantriebsbänder jeweils an einen Teilabschnitt der Lebensmitteloberfläche oder der Auflageflächeoberfläche anlegbar sind und der Käse aufgrund ihrer gegenläufigen Bewegungsrichtungen um die Drehachse drehen kann. Ferner ist die Drehrichtung des Käses dadurch variierbar, dass die jeweiligen Umlaufrichtungen der beiden Endlosantriebsbänder geändert werden, so dass das Schneiden des Käses in Portionsstücke optimal an die jeweiligen Verarbeitungserfordernisse, bspw. die Lebensmittelbeschaffenheit, anpassbar ist.

In einer weiteren bevorzugten Ausgestaltung sind die zwei Endlosantriebsbänder in Umfangsrichtung des Lebensmittels gesehen um etwa 180° versetzt angeordnet.

Diese Maßnahme bewirkt, dass die zwei Endlosantriebsbänder etwa symmetrisch bezüglich des Lebensmittels oder der Auflagefläche und beidseitig jeweils bspw. halbumfänglich an die äußere Oberfläche des Lebensmittels oder der Auflagefläche anlegbar sind, so dass die Drehkräfte gleichmäßig verteilt über die gesamte Oberfläche angreifen. Hierdurch wird vorteilhafterweise eine Beeinträchtigung der Lebensmitteloberfläche oder der Auflageflächeoberfläche aufgrund einer punktuellen Berührung mit den Endlosantriebsbändern vermieden. Ferner ermöglicht die große Drehübertragungsfläche eine optimale Drehbewegung des Lebensmittels um die Drehachse.

In einer weiteren bevorzugten Ausgestaltung weist die Zentrier- und Drehvorrichtung Spann- und Umlenkelemente zum Spannen und Umlenken des zumindest einen Zentrier- und Drehelements auf.

Diese Maßnahme hat den Vorteil, dass das zumindest eine Zentrier- und Drehelement optimal an die äußere Oberfläche des Lebensmittels oder der Auflagefläche anlegbar ist, da es in gespannter Form derart positioniert und mit jener in Eingriff bringbar ist, um das Zentrieren und schrittweise Drehen des Lebensmittels zu ermöglichen. Die Spann- und Umlenkelemente dienen insbesondere dazu, die umfängliche Anordnung des zumindest einen Zentrier- und Drehelements derart zu variieren, dass es an die spezielle Geometrie der äußeren Oberfläche des Lebensmittels oder der Auflagefläche angepasst werden kann. Die Spann- und Umlenkelemente dienen ferner zum Spannen des zumindest einen Zentrier- und Drehelements, so dass jenes optimal entlang der äußeren Oberfläche geführt werden kann, wodurch sich vorteilhafterweise ein optimales Drehen des zumindest einen Zentrier- und Drehelements und des Lebensmittels ergibt.

In einer weiteren bevorzugten Ausgestaltung weisen die Spann- und Umlenkelemente Rollen auf, von denen zumindest eine in Drehung versetzbar ist.

Diese Maßnahme stellt vorteilhafterweise eine konstruktive einfache Bauweise der Spann- und Umlenkelemente dar, da das zumindest eine Zentrier- und Drehelement, d.h. die zwei Endlosantriebsbänder, um die Rollen spannbar und umlenkbar ist. Die zumindest eine in Drehung versetzbare Rolle unterstützt die Drehbewegung der Endlosantriebsbänder und des Lebensmittels um die Drehachse bzw. treibt die Endlosförderbänder an, so dass infolge ihrer zusätzlichen gleichartigen Drehbewegung eine Reibung zwischen ihr und den Endlosantriebsbändern aufgrund einer gleichartigen Drehbewegung beider verringert wird. Die Rollen sind aus einem geeigneten Material, bspw. Kunststoff gebildet, so dass die Reibung zwischen ihnen, insbesondere, wenn sie drehfest ausgebildet sind, und den Endlosantriebsbändern verringert wird.

In einer weiteren bevorzugten Ausgestaltung sind erste Rollen der Spann- und Umlenkelemente benachbart zur äußeren Oberfläche des Lebensmittels und um 180° zueinander und zweite Rollen der Spann- und Umlenkelemente in einem geeigneten Abstand zu den ersten Rollen anordbar.

Diese Maßnahme bewirkt, dass die ersten Rollen der Spann- und Umlenkelemente derart geeignet bezüglich der äußeren Oberfläche des Lebensmittels oder der Auflagefläche positioniert werden können, dass sie einen beidseitigen halbumfänglichen Form- bzw. Reibschluss der äußeren Oberfläche mit den Endlosantriebsbändern ermöglichen, wodurch die Auflagefläche bzw. das Lebensmittel vorteilhafterweise exakt anordbar ist. Ferner bewirkt die geeignet beabstandete Anordnung der zweiten Rollen der Spann- und Umlenkelemente, dass die Endlosantriebsbänder ausreichend straff gespannt sind, so dass vorteilhafterweise die Drehbewegung des Lebensmittels um die Drehachse verbessert wird.

In einer weiteren bevorzugten Ausgestaltung weist die Zentrier- und Drehvorrichtung Antriebsmittel zum Bewegen des zumindest einen Zentrier- und Drehelements auf.

Diese Maßnahme hat den Vorteil, dass im Vergleich zu einer manuell erzeugten Drehbewegung eine gleichmäßigere Drehbewegung des Lebensmittels um die Drehachse erzeugt wird, so dass die Portionsstücke hinsichtlich einer vorgegebenen Größe oder eines vorgegebenen Gewichts präzise geschnitten werden können. Ferner erfolgt das Verarbeiten des Lebensmittels vorteilhafterweise besonders kostengünstig, da aufgrund des automatisierten Antriebs zusätzliche Personalkosten vermieden werden.

In einer weiteren bevorzugten Ausgestaltung weisen die Antriebsmittel zumindest eine Antriebsrolle auf, die das zumindest eine Zentrier- und Drehelement antreibt.

Diese Maßnahme bewirkt, dass die Antriebsrolle in direktem Kontakt mit dem zumindest einen Zentrier- und Drehelement steht, so dass vorteilhafterweise kein zusätzliches Element zum Übertragen der Drehbewegung der Antriebsmittel auf das zumindest eine Zentrier- und Drehelement notwendig ist. Die zumindest eine Antriebsrolle kann bspw. gleichzeitig eine Rolle der Spann- und Umlenkelemente darstellen.

In einer weiteren bevorzugten Ausgestaltung ist die Auflagefläche bezüglich der Drehachse, die bezüglich der Auflagefläche mittig verläuft, fest angeordnet und das zumindest eine Zentrier- und Drehelement ist zumindest teilweise an die äußere Oberfläche des Lebensmittels anlegbar und mit ihr in Eingriff bringbar.

Diese Maßnahme hat den Vorteil, dass die Drehbewegung des Lebensmittels um die Drehachse einfach steuerbar ist, da das Lebensmittel bezüglich der Auflagefläche festliegt und bei dem Schneidvorgang keine zusätzliche Drehbewegung der Auflagefläche berücksichtigt werden muss. Ferner kann das Lebensmittel bezüglich der Auflagefläche mittig angeordnet werden, wodurch die erfindungsgemäße Vorrichtung einfach bedienbar ist. Zudem wird durch das Anlegen des Zentrier- und Drehelements an die äußere Oberfläche des Lebensmittels und sein In-Eingriff-Bringen mit dieser gewährleistet, dass das geschnittene Lebensmittel nicht auseinanderfällt, sondern in seiner anfänglichen Stellung verbleibt. Reibung zwischen dem Lebensmittel und der Auflagefläche kann bspw. durch eine geeignete Wahl des Materials der Auflagefläche verringert werden.

In einer weiteren bevorzugten Ausgestaltung weist die Vorrichtung ferner eine Winkelmesseinrichtung zum Erfassen eines Drehwinkels des Lebensmittels bezüglich der Drehachse auf.

Diese Maßnahme hat den Vorteil, dass das winkelgenaue Schneiden des Lebensmittels in Portionsstücke besonders genau durchgeführt werden kann, da bei jeder Drehung des Käses der Drehwinkel erst berechnet und nach der ausgeführten Drehbewegung vor Ausführen eines Schnitts zusätzlich überprüft werden kann.

In einer weiteren bevorzugten Ausgestaltung weist die Auflagefläche ein Wiegemittel auf.

Diese Maßnahme hat den Vorteil, dass die erfindungsgemäße Vorrichtung zusätzlich zu einem winkelgenauen Schneiden ein gewichtsgenaues Schneiden ausführen kann.

Ferner ist die erfindungsgemäße Vorrichtung vorteilhafterweise besonders klein und konstruktiv sehr einfach ausgebildet, da das Wiegemittel in der Auflagefläche integriert werden kann. Das Wiegemittel kann bspw. als Waage ausgebildet sein, die gleichzeitig die Auflagefläche für das Lebensmittel bildet.

In einer weiteren bevorzugten Ausgestaltung weist die Schneidvorrichtung einen Schneiddraht auf, der von der Drehachse aus gesehen in radialer Richtung bewegbar ist.

Diese Maßnahme bewirkt, dass das Lebensmittel aufgrund eines geringen Durchmessers des Schneiddrahts in dünnste Portionsstücke geschnitten werden kann, indem der Schneiddraht in radialer Richtung von der Lebensmitteloberfläche zum Mittelpunkt des Lebensmittels und nach einem Weiterdrehen des Lebensmittels bwz. der Auflagefläche um die Drehachse in umgekehrter Weise geschnitten wird. Hierdurch ergibt sich vorteilhafterweise eine besonders kostengünstige Ausgestaltung der Schneidvorrichtung, da sie unabhängig von der Lebensmittelgröße oder Lebensmittelform verwendet werden kann und bei einer Änderung der Eigenschaften des Lebensmittels auch nicht ausgetauscht werden muss. Insbesondere ist ein Reparieren der Schneidvorrichtung nach einer längeren Benutzung besonders einfach, da nur der Schneiddraht gegen einen neuen Schneiddraht ausgetauscht werden muss.

In einer alternativen bevorzugten Ausgestaltung weist die Schneidvorrichtung einen mit Ultraschall beaufschlagbaren Schneider auf, der von der Drehachse aus gesehen in radialer Richtung bewegbar ist.

Diese Maßnahme stellt vorteilhafterweise eine weitere Ausgestaltung der Schneidvorrichtung dar, die ein berührungsfreies Zerteilen des Lebensmittels ermöglicht. Hierdurch wird eine Beeinträchtigung des Lebensmittels an den jeweiligen Schnittflächen vermieden.

Die Schneidvorrichtung kann anstatt eines Schneiddrahts oder eines Ultraschallschneiders auch jedes andere Schneidwerkzeug, bspw. ein Messer, aufweisen.

In einer weiteren bevorzugten Ausgestaltung sind die zur Schneidvorrichtung benachbarten Rollen der Spann- und Umlenkelemente derart voneinander beabstandet, dass die Schneidvorrichtung zwischen diesen Rollen bewegbar ist.

Diese Maßnahme bewirkt, dass diese Anordnung der Rollen der Spann- und Umlenkelemente eine besonders große Berührungsfläche der Endlosantriebsbänder mit der Oberfläche des Lebensmittels oder der Auflagefläche ermöglicht, wobei gleichzeitig die Schneidvorrichtung ohne großen technischen Aufwand in radialer Richtung bewegbar ist. Hierdurch ist die erfindungsgemäße Vorrichtung vorteilhafterweise konstruktiv sehr einfach ausgebildet.

In einer weiteren bevorzugten Ausgestaltung weist die Auflagefläche zumindest einen radial nach außen verlaufenden Schlitz auf, entlang dessen die Schneidvorrichtung bewegbar ist.

Diese Maßnahme hat den Vorteil, dass der Schneidvorgang besonders einfach durchgeführt werden kann, da das Lebensmittel direkt auf die Auflagefläche auflegbar ist und nicht während des Schneidvorgangs angehoben werden muss. Ferner wird eine Beschädigung der Auflagefläche durch den Schneiddraht vermieden, so dass vorteilhafterweise die Auflagefläche mehrmals verwendbar ist. Hierbei ist der nach außen verlaufende Schlitz der Auflagefläche bezüglich der Schneidvorrichtung, d.h. bezüglich des Schneidwerkzeugs, ausgerichtet.

In einer weiteren bevorzugten Ausgestaltung weist die Vorrichtung ferner ein Ausstechmittel zum Entfernen eines Lebensmittelanteils auf, der um die Drehachse angeordnet ist.

Diese Maßnahme bewirkt, dass der Schneiddraht während einer Weiterbewegung des Lebensmittels frei in dem Lebensmittelzentrum angeordnet ist, wodurch vorteilhafterweise die Drehbewegung ohne zusätzliche Reibungskräfte zwischen dem Schneiddraht und dem Käse ausgeführt werden kann.

Weitere Vorteile und Merkmale ergeben sich aus der nachfolgenden Beschreibung und der beigefügten Zeichnung.

Es versteht sich, dass die vorstehend genannten und die nachstehend noch zu erläuternden Merkmale nicht nur in den angegebenen Kombinationen, sondern in auch in anderen Kombinationen oder in Alleinstellung einsetzbar sind, ohne den Rahmen der vorliegenden Erfindung zu verlassen.

Die Erfindung wird nachfolgend anhand einiger ausgewählter Ausführungsbeispiele im Zusammenhang mit der beiliegenden Zeichnung näher beschrieben und erläutert. Es zeigen:
- Fig. 1: eine perspektivische Ansicht einer erfindungsgemäßen Vorrichtung zum Schneiden von Lebensmitteln;
- Fig. 2: eine perspektivische Ansicht einer Zentrier- und Drehvorrichtung der Vorrichtung in Fig. 1 in Ruhestellung;
- Fig. 3: eine perspektivische Ansicht der Zentrier- und Drehvorrichtung in Fig. 2, wobei ein Käselaib auf einer Auflagefläche angeordnet ist;
- Fig. 4: eine perspektivische Ansicht der Zentrier- und Drehvorrichtung in Fig. 3 in einer Betriebsstellung;
- Fig. 5: eine perspektivische Ansicht der Zentrier- und Drehvorrichtung in Fig. 4 während eines Ausstechens eines mittig um eine Drehachse angeordneten Käseanteils;
- Fig. 6: eine perspektivische Ansicht der Zentrier- und Drehvorrichtung in Fig. 5 nach dem Ausstechen des Käseanteils; und
- Fig. 7: eine perspektivische Ansicht der Zentrier- und Drehvorrichtung in Fig. 6 während eines Schneidens des Käselaibs in Portionsstücke.

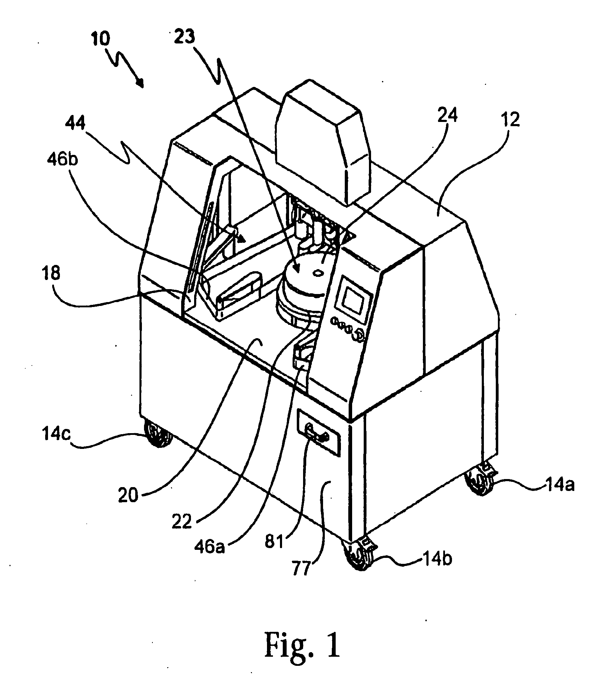

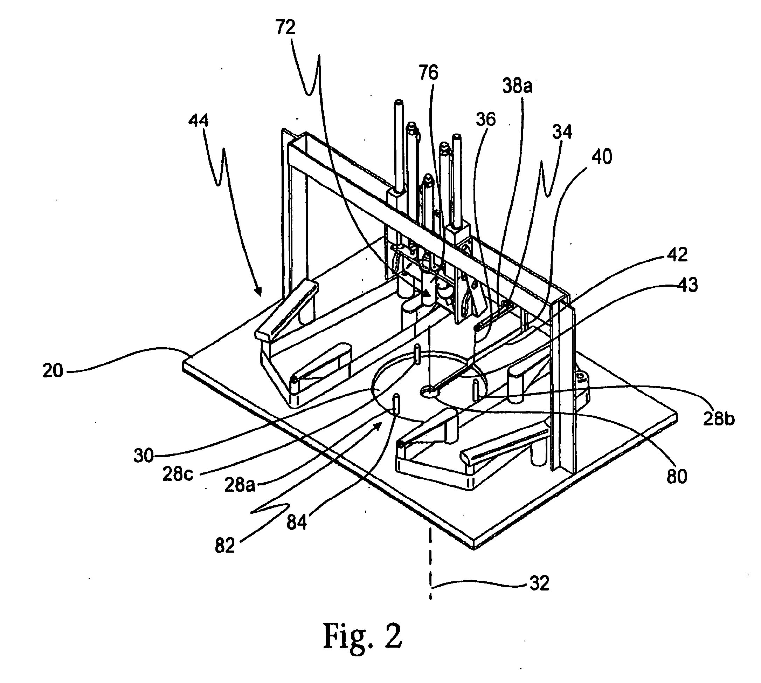

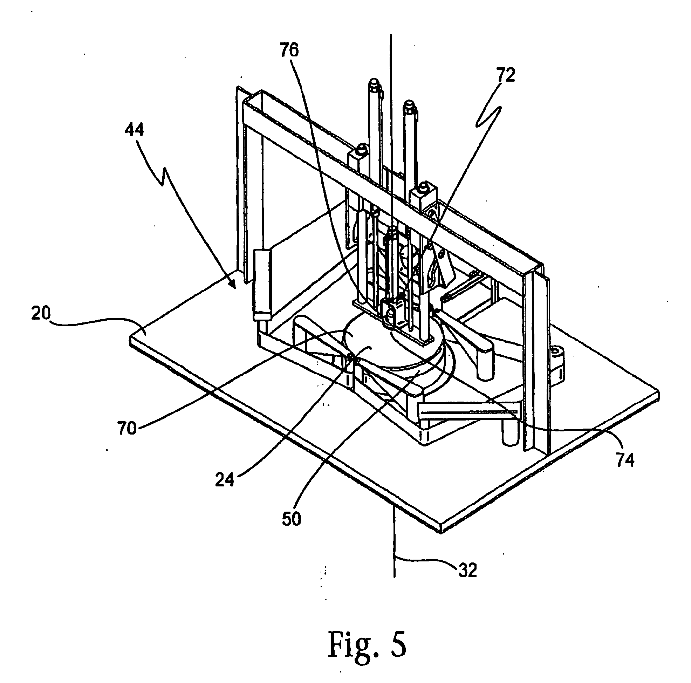

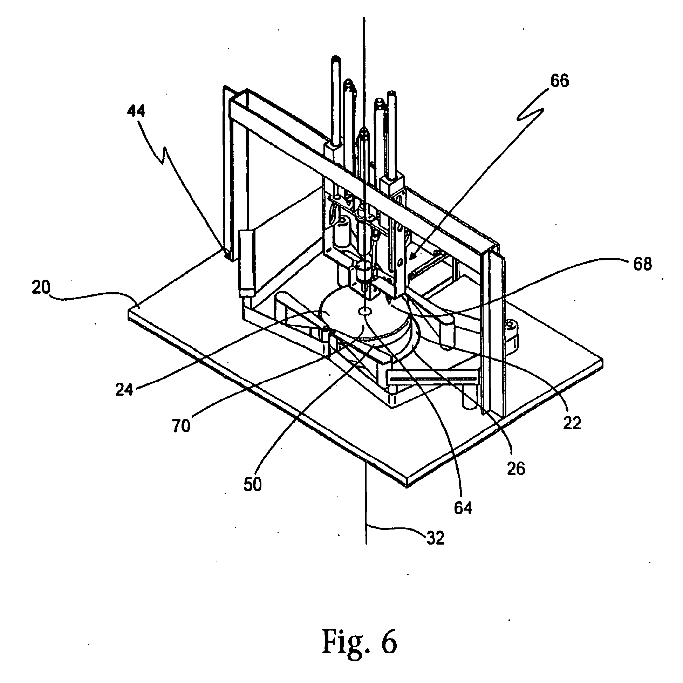

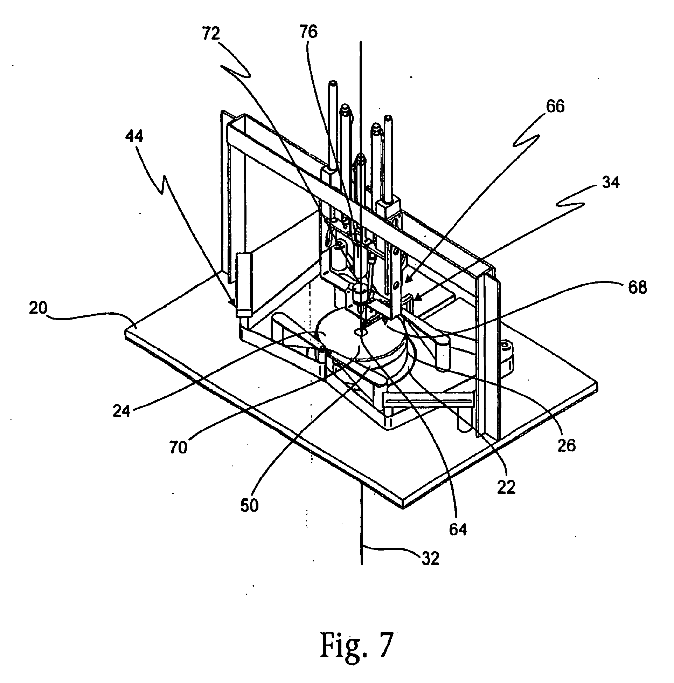

In Fig. 1 ist eine mit dem allgemeinen Bezugszeichen 10 versehene Vorrichtung zum Schneiden von Lebensmitteln, insbesondere zum Schneiden von Käse, dargestellt. Weitere Einzelheiten der Vorrichtung 10 sind in Fig. 2-7 dargestellt.

Die Vorrichtung 10 wird in der Lebensmittelverarbeitung verwendet, um bspw. Käselaibe oder Torten verschiedenster Größe, Form und Beschaffenheit gewichtsgenau bzw. winkelgenau in Portionsstücke zu zerteilen. Unter einem gewichtsgenauen Schneiden des Lebensmittels in Portionsstücke wird sein Zerteilen in gleich schwere Portionsstücke verstanden. Ein winkelgenaues Schneiden ermöglicht ein Zerteilen des Lebensmittels in gleich große Portionsstücke, deren jeweiliges Gewicht anschließend vor einem weiteren Verpacken gewogen werden muss. Weist der Käselaib einen in etwa kreisförmigen Umfang auf, so entspricht insbesondere das winkelgenaue Schneiden in Portionsstücke einem segmentweisen Zerteilen des Käselaibs.

Die Vorrichtung 10 weist ein Gehäuse 12 auf, das fahrbar auf Rollen 14a-c angeordnet ist, um es einfach und flexibel in einem Produktionsgelände verschieben zu können. Das Gehäuse 12 ist aus einem gut reinigbarem Material, bspw. Edelstahl, ausgebildet.

Das Gehäuse 12 weist eine Öffnung 18 auf, die mit einer bspw. nach oben aufklappbaren Beschickungstür (nicht dargestellt) bspw. aus Plexiglas verschlossen werden kann. Aufgrund des Materials der Beschickungstür kann ein Schneiden des Lebensmittels durch den Bediener von außerhalb des Gehäuses 12 überwacht werden. Das Schneiden der Lebensmittel in Portionsstücke erfolgt vollautomatisiert, so dass hierzu vorteilhafterweise zusätzliches Personal vermieden wird.

Die Vorrichtung 10 weist innerhalb des Gehäuses 12 eine horizontal angeordnete Arbeitsfläche 20 auf, die in Greifhöhe des Bedieners angeordnet ist. Auf der Arbeitsfläche 20 ist eine in das Gehäuse 12 einschiebbare Auflagefläche 22 für das Lebensmittel 23, hier für einen runden Käselaib 24, vorgesehen. Die Auflagefläche 22 ist als runder Kunststoffteller 26 ausgebildet, der auf drei zylinderförmigen Zapfen 28a-c aufsetzbar formschlüssig in einer ebenfalls runden Vertiefung 30 der Arbeitsfläche 20 aufnehmbar ist. Die drei Zapfen 28a-c sind um etwa 120° zueinander versetzt in der Vertiefung 30 angeordnet und senkrecht zu dieser höhenverstellbar ausgebildet. Sie sind während des Schneidens derart in die Vertiefung 30 eingefahren, dass der Teller 26 etwa eben zur Arbeitsfläche 20 angeordnet ist. Der Teller 26 ist ferner bezüglich einer mittig zur Auflagefläche 22 verlaufenden Drehachse 32 fest, d.h. nicht um die Drehachse 34 drehbar, angeordnet. Es ist ebenfalls möglich, dass der Teller drehbar um die Drehachse 32 ausgebildet und der Käselaib 24 drehfest auf dem Teller 26 angeordnet ist.

Die Vorrichtung 10 weist ferner eine Schneidvorrichtung 34 zum Schneiden des Käselaibs 24 in Portionsstücke auf. Die Schneidvorrichtung 34 ist als dünner Schneiddraht 36 ausgebildet, der bezüglich der Drehachse 32 in radialer Richtung gesehen bewegbar und etwa parallel zur Drehachse 32 zwischen zwei Enden 38, hier dargestellt nur ein Ende 38a, einer U-förmigen Halterung 40 eingespannt ist, so dass der Käselaib 24 seiner Höhe nach geschnitten wird. Hierzu weisen die Arbeitsfläche 20 einen Schlitz 42, die Vertiefung 30 einen Schlitz 43 und die Auflagefläche 22 einen Schlitz (nicht dargestellt) auf, die jeweils entsprechend zum Schneiddraht 36 ausgerichtet sind und entlang derer der Schneiddraht 36 geführt wird. Ist der Teller 26, auf dem der Käselaib 24 ruhig aufgelegt ist, drehbar um die Drehachse 32 ausgebildet, erfolgt das Schneiden des Käselaibs 24 entlang seiner Höhe gesehen von oben nach unten, so dass der Schlitz 42 der Arbeitsfläche 22, der Schlitz 43 der Vertiefung 30 und der Schlitz der Auflagefläche 22 nicht vorgesehen sein müssen.

Der Schneiddraht 36 ist bspw. aus Edelstahl gefertigt, um ohne Verrostungsgefahr einfach gereinigt zu werden. Er kann auch aus jedem anderen gut reinigbarem Material, wie z.B. Kunststoff, gefertigt sein.

Die Schneidvorrichtung 34 kann anstelle des Schneiddrahts 36 ein flaches Schneidmesser aufweisen, das entlang seiner Längserstreckung zwei Edelstahlschneidklingen aufweist. Sowohl der Schneiddraht 36 als auch das Schneidmesser ermöglichen aufgrund ihres kleinen Durchmessers bzw. seiner geringen Breite ein sehr genaues und präzises Schneiden in dünnste Portionsstücke. Die Schneidvorrichtung 34 kann auch einen mit Ultraschall beaufschlagbaren Schneider aufweisen, der ein berührungsfreies Zerteilen des Käselaibs 24 ermöglicht. Sie kann ebenfalls mit jedem anderen geeigneten Schneidwerkzeug, bspw. einer länglichen Klinge, versehen sein, mit dem der Käselaib 24 in Portionsstücke geschnitten werden kann.

Die Vorrichtung 10 weist ferner eine auf der Arbeitsfläche 20 angeordnete Zentrier-und Drehvorrichtung 44 auf. Fig. 2, 3 bzw. Fig. 4-7 zeigen die Zentrier- und Drehvorrichtung in Ruhestellung bzw. in Betriebsstellung.

Die Zentrier- und Drehvorrichtung 44 weist zumindest ein Zentrier- und Drehelement 46, hier zwei Zentrier- und Drehelemente 46a,b, auf, die jeweils Form eines flexiblen, länglichen Elements 47a,b ausgebildet sind. Die Zentrier- und Drehelemente 46a,b dienen dazu, zumindest teilweise an eine äußere Oberfläche 50 des Käselaibs 24, hier die äußere umfängliche Oberfläche 50 des Käselaibs 24, angelegt und mit ihr in Eingriff gebracht zu werden, um den Käselaib 24 auf der Auflagefläche 22, d.h. auf dem Teller 26, zu zentrieren und schrittweise um die Drehachse 32 zu drehen. Ist der Teller 26 drehbar bezüglich der Drehachse 32 ausgebildet, sind die Zentrier- und Drehelemente 46a,b an eine äußere Oberfläche des Tellers 26 anlegbar und mit ihr in Eingriff bringbar. Hierbei liegt der Käselaib 24 ruhig auf dem Teller 26 auf und der Teller wird zusammen mit dem Käselaib 24 zentriert und gedreht.

Die Elemente 47a,b sind aus einem flexiblen, vorzugsweise dehnungsfreien Material gebildet. Wie in Fig. 2-7 dargestellt, sind die Elemente 47a,b als Endlosantriebsbänder 48a,b in Form von Leinengurten 52a,b ausgebildet. Sie können ebenfalls seilförmig mit einem in etwa runden Durchmesser ausgebildet sein.

Die Endlosantriebsbänder 48a,b sind ferner um etwa 180° versetzt zueinander angeordnet und etwa halbumfänglich reibschlüssig mit der äußeren Oberfläche 50 des Käselaibs 24 in Eingriff gebracht, indem die Endlosantriebsbänder 48a,b zumindest teilweise an der äußeren Oberfläche 50 des Käselaibs 24 anliegen. Die äußere Oberfläche 50 des Käselaibs 24 kann ebenfalls mit den Endlosantriebsbändern 48a,b formschlüssig in Eingriff gebracht werden. Kommen die Endlosantriebesbänder 48a,b mit der äußeren Oberfläche des Tellers 26 in Eingriff, so wird der Formschluss bspw. dadurch ermöglicht, dass der Teller 26 entlang seiner umfänglichen Oberfläche Öffnungen oder eine Zahnung aufweist, in die domartige Spitzen der Endlosantriebsbänder 48a,b eingeführt werden können bzw. die mit einer entsprechenden Zahnung der Endlosantriebsbänder 48a,b in Eingriff kommt. Hierbei weisen die Endlosantriebsbänder 48a,b auf ihrer zur äußeren Oberfläche des Tellers 26 gewandten Oberfläche die dornartigen Spitzen bzw. die Zahnung auf.

Die Zentrier- und Drehvorrichtung 44 weist eine beliebige Anzahl von Spann- und Umlenkelementen 54 auf, um die Endlosantriebsbänder 48a,b zu spannen und entlang ihrer Bewegungsrichtung umzulenken. In dem gezeigten Ausführungsbeispiel sind für jedes Endlosantriebsband 48a,b jeweils vier Spann- und Umlenkelemente elemente 54a-h angeordnet. Die Spann- und Umlenkelemente 54a-h weisen in Drehung versetzbare Rollen 58, hier acht Rollen 58a-h, auf, um die die Gurte 52a,b geführt sind. Die Rollen 58c,g sind drehbar auf der Arbeitsfläche 20 angeordnet, während die Rollen 58a,b,d-f,h mittels Hebelarmen 60a-f auf der Arbeitsfläche 20 verschwenkbar ausgebildet sind. Die Hebelarme 60a-f sind jeweils an einem Pfosten 61a-f vorgesehen und sind in einer zur Arbeitsfläche 20 etwa parallelen Ebene verschwenkbar. Es ist ebenfalls möglich, dass nur die Rollen 58c,g in Drehung versetzbar und die übrigen Rollen 58a,b,d-f,h drehfest ausgebildet sind.

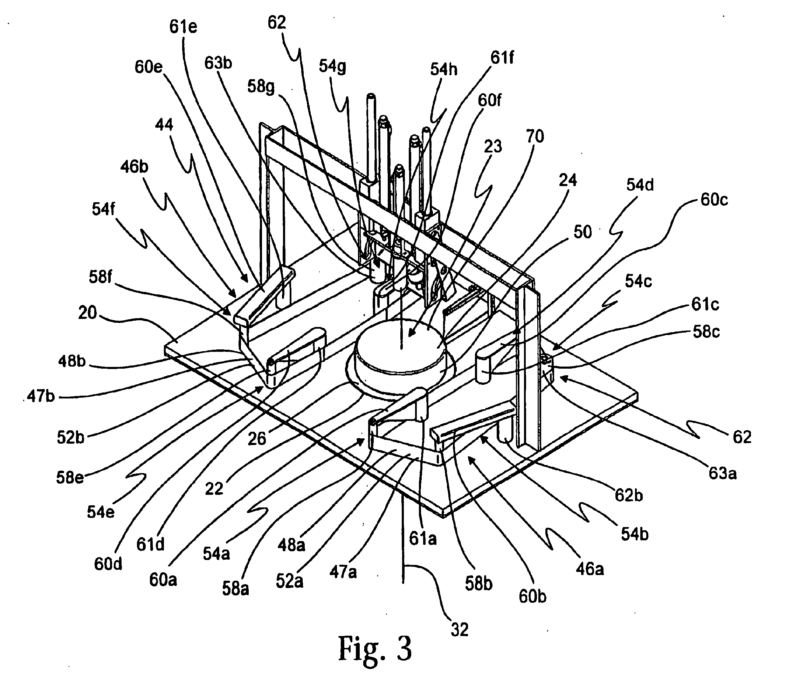

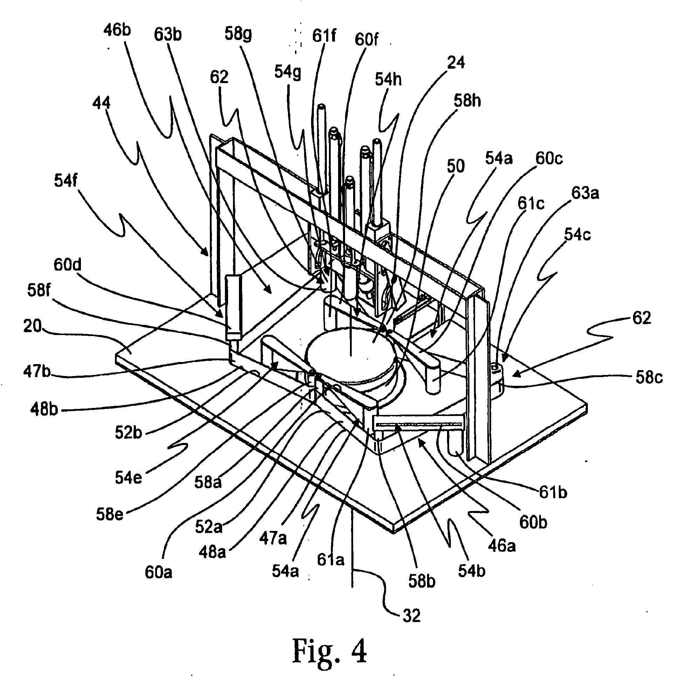

In der in Fig. 2, 3 dargestellten Ruhestellung der Zentrier- und Drehvorrichtung 44 sind die Hebelarme 60a-f in etwa parallel zu den Enden 38 der Schneidvorrichtung 34 angeordnet, so dass die Endlosantriebsbänder 48a,b in einer gespannten Anordnung nicht die äußere Oberfläche 50 des Käselaibs 24 berühren. In der in Fig. 4-7 gezeigten Betriebsstellung der Zentrier- und Drehvorrichtung 44 sind die Rollen 58a,d,e,h der Spann- und Umlenkelemente 54a,d,e,h benachbart zur äußeren Oberfläche 50 des Käses 24 und um 180° versetzt zueinander und die Rollen 58b,c,f,g der Spann- und Umlenkelemente 54b,c,f,g in einem geeigneten Abstand zu den Rollen 58a,d,e,h der angeordnet. In diesem Sinne sind die Hebelarme 60a,c,d,f in etwa senkrecht zu ihrer Anordnung in der Ruhestellung der Zentrier- und Drehvorrichtung 44 und direkt benachbart zur äußeren Oberfläche 50 des Käselaibs 24 angeordnet, so dass die Endlosantriebsbänder 48a,b an die äußere umfängliche Oberfläche 50 des Käselaibs 24 angelegt und mit ihr in Eingriff gebracht sind. Die Hebelarme 60b,e sind derart verschwenkt auf der Arbeitsfläche 20 angeordnet, dass die Rollen 58b,f so weit von den übrigen Rollen 58a,c-e,g,h beabstandet-sind, dass die Endlosantriebsbänder 48a,b entlang ihres Umfangs gespannt sind. Die Rollen 58d,h sind ferner derart weit voneinander beabstandet, dass der Schneiddraht 36 der Schneidvorrichtung 34 in den zwischen ihnen gebildeten Zwischenraum bewegbar ist.

Die Zentrier- und Drehvorrichtung 44 weist ferner Antriebsmittel 62 zum Bewegen des Zentrier- und Drehelements 46, d.h. der Endlosantriebsbänder 48a,b, auf. Die Antriebsmittel 62 weisen zumindest eine Antriebsrolle 63, hier je eine Antriebesrolle 63a,b für je einen der Gurte 52a,b, auf, die über einen unter der Arbeitsfläche 20 angeordneten Motor (nicht dargestellt) bspw. elektrisch oder pneumatisch angetrieben werden. In dem gezeigten Ausführungsbeispiel entsprechen die Antriebsrollen 63a,b den drehbar auf der Arbeitsfläche 20 angeordneten Rollen 58c,g zum Spannen und Umlenken der Gurte 52a,b. Eine Drehbewegung der Antriebsrollen 63a,b versetzt die Gurte 52a,b in Drehbewegung, die wiederum die Rollen 58a,b,d,e,f,h entsprechend eines Umlaufsinns der Gurte 52a,b in Drehbewegung versetzen. Folglich unterstützen die Rollen 58a,b,d,e,f,h die Drehbewegung der Gurte 52a,b, da eine Reibung zwischen den Rollen 58a,b,d,e,f,h und den Gurten 52a,b vermindert wird. Es ist ebenfalls möglich, dass die Antriebsmittel 62 derart ausgelegt sind, dass sie alle Rollen 58a-h in Drehung versetzen können. Hierzu weisen die Antriebsmittel 62 acht Antriebsrollen 63 auf, die jeweils den Rollen 58a-h entsprechen und alle jeweils mit einer gleichen Drehgeschwindigkeit drehen.

Die Endlosantriebsbänder 48a, b sind in gegenläufigen Umlaufrichtungen bewegbar, so dass die Drehbewegung des Käselaibs 24 um die Drehachse 32 erzeugt wird. Die Antriebsmittel 62 bewirken eine schrittweise Drehbewegung des Käses 24 um jeweils vorgegebene Drehwinkel, so dass zwischen zwei Drehbewegungen der Schneiddraht 36 entweder von der äußeren Oberfläche 50 zu einem Mittelpunkt 64 des Käselaibs 24 oder vom Mittelpunkt 64 zur äußeren Oberfläche 50 geführt wird. Auf diese Weise wird der Käselaib 24 segmentweise in Portionsstücke geschnitten.

Die Vorrichtung 10 weist ferner eine Winkelmesseinrichtung 66 zum Erfassen des Drehwinkels des Käselaibs 24 bezüglich der Drehachse 32 auf. Eine Winkelerfassung basiert auf einem mechanischen Messverfahren. Hierzu weist die Winkelmesseinrichtung 66 eine kreisförmig um die Drehachse 32 bewegbare Messspitze 68 auf, die auf eine obere Deckfläche 70 des Käselaibs 24 aufgesetzt wird. Die Messspitze 68 dringt in die Deckfläche 70 des Käselaibs 24 ein, so dass zwischen der Messspitze 68 und der Käsedeckfläche 70 ein Formschluss gebildet wird. Dies ermöglicht eine schlupffreie Erfassung der Drehbewegung des Käselaibs 24 um die Drehachse 32. Die Drehung wird mit der Winkelmesseinrichtung 66 zuvor berechnet, während der Drehung erfasst und ausgewertet. Nach einer Drehbewegung um einen maximalen Gesamtwinkel von 180° wird die Messspitze 68 von der Deckfläche 70 des Käselaibs 24 entfernt und auf 0° zurückgeführt, so dass sie nicht in den Arbeitsbereich der Schneidvorrichtung 34 eingreift. Hierbei bezeichnet eine 0°-Stellung der Messspitze 68 ihre Anordnung entlang einer ersten Schnittlinie im Käselaib 24. Beim winkelgenauen Schneiden wird der Käselaib 24 um den erforderlichen Drehwinkel und beim gewichtsgenauen Schneiden um den dem angestrebten Gewicht entsprechenden, berechneten Drehwinkel gedreht. Die Winkelerfassung kann ebenfalls berührungsfrei mittels einer optischen Oberflächenabtastung bspw. der oberen Deckfläche 70 erfolgen.

Die Vorrichtung 10 weist ferner Ausstechmittel 72 zum Entfernen eines Käseanteils 74 auf, der um die Drehachse 32 angeordnet ist. Die Ausstechmittel 72 sind als zylinderförmiger Stanzer 76 ausgebildet, der von oben auf die Deckfläche 70 des Käselaibs 24 aufsetzbar ist und den Käselaib 24 entlang seiner gesamten Höhe durchsticht. Der ausgestochene Käseanteil 74 fällt durch die Auflagefläche 22 und die Vertiefung 30 in einen unter der Arbeitsfläche 20 angeordneten Auffangbehälter 77. Ein Durchmesser des Stanzers 76 ist geringfügig kleiner als ein Durchmesser einer Öffnung (nicht dargestellt) in der Auflagefläche 22 und einer Öffnung 80 in der Vertiefung 30 ausgebildet, so dass der ausgestochene Käseanteil 74 einfach in den Auffangbehälter 77 fallen kann.

Der Auffangbehälter 77, der zum Auffangen der ausgestochenen Käseanteile 74 dient, ist als Schublade im Gehäuse 12 integriert. Er weist an seiner äußeren Oberfläche einen Handgriff 81 auf, mit dem er zum Leeren aus dem Gehäuse 12 entnommen werden kann.

Um ein gewichtsgenaues Schneiden des Käselaibs 24 in Portionsstücke zu ermöglichen, weist die Vorrichtung 10 ferner Wiegemittel 82 auf, die bspw. als Waage 84 ausgebildet sein können. In dem gezeigten Ausführungsbeispiel ist die Waage 84 in den Zapfen 28a-c aufgenommen, so dass die Wiegemittel 82 platzsparend in der Vorrichtung 10 integriert sind. Es ist ebenfalls möglich, dass der Teller 26 als Waage 84 ausgebildet ist.

Um mit der Vorrichtung 10 den Käselaib 24 in Portionsstücke zu schneiden, wird der Käselaib 24 zuerst auf den Teller 26 aufgelegt. Hierbei befindet sich die Zentrier- und Drehvorrichtung 44 in ihrer Ruhestellung. Nach einem Verschließen der Beschickungstür wird die Zentrier- und Drehvorrichtung 44 in ihre Betriebsstellung gebracht, wobei die Rollen 58a,d,e,h, benachbart zur Oberfläche 50 des Käselaibs 24 angeordnet werden. Die Rollen 58b,f werden gleichzeitig geeignet positioniert, um ein Spannen der Gurte 52a,b zu ermöglichen. Die Gurte 52a,b kommen mit dem Käselaib 24 in Eingriff, zentrieren ihn auf dem Teller 26 und halten ihn während des gesamten Schneidvorgangs, so dass dieser nicht in seine bereits geschnittenen Portionsstücke zerfallen kann. Nach einem Ausstechen des Käseanteils 74 aus einer Mitte der Käselaibs 24 wird der Schneiddraht 36 von der umfänglichen Oberfläche 50 des Käselaibs 24 zum Mittelpunkt 64 des Käselaibs 24 hin bewegt, so dass ein radial verlaufender Schnitt im Käselaib 24 erzeugt wird. Befindet sich der Schneiddraht 36 im Mittelpunkt 64 des Käselaibs 24, so wird der Käselaib 24 um einen vorgegebenen Drehwinkel um die Drehachse 32 weiterbewegt. Nach dieser Drehbewegung wird der Schneiddraht 36 vom Mittelpunkt 64 zur umfänglichen Oberfläche 50 des Käselaibs 24 bewegt, so dass aus dem Käselaib 24 ein Portionsstück geschnitten wird. Dieser Vorgang wird solange wiederholt, bis der gesamte Käselaib 24 in Portionsstücke geschnitten ist, wobei ein letzter Schnitt vom Mittelpunkt 64 zur umfänglichen Oberfläche 50 ausgeführt wird. Der jeweilige Drehwinkel bzw. die jeweilige Drehgeschwindigkeit der einzelnen Drehschritte des Käselaibs 24 kann für jedes zu schneidende Portionsstück separat gewählt und eingestellt werden.

## Patentansprüche

1. Vorrichtung zum Schneiden von Lebensmitteln, insbesondere zum Schneiden von Käse (24), mit einer Auflagefläche (22), auf die zumindest ein Lebensmittel (23) auflegbar ist, mit einer Schneidvorrichtung (34) zum Schneiden des Lebensmittels (23) in Portionsstücke und mit Mitteln zum Zentrieren des Lebensmittels (23) **gekennzeichnet durch** eine Zentrier- und Drehvorrichtung (44), die zumindest ein Zentrier- und Drehelement (46a,b) aufweist, das derart ausgebildet ist, dass es zumindest teilweise an eine äußere Oberfläche (50) des Lebensmittels (23) oder der Auflagefläche (22) anlegbar und mit ihr in Eingriff bringbar ist, um das Lebensmittel (23) zu zentrieren und schrittweise um eine Drehachse (32) zu drehen.

2. Vorrichtung nach Anspruch 1, **dadurch gekennzeichnet, dass** das zumindest eine Zentrier- und Drehelement (46a,b) durch Formschluss mit der äußeren Oberfläche (50) des Lebensmittels (23) oder der Auflagefläche (22) in Eingriff bringbar ist.

3. Vorrichtung nach Anspruch 1 oder 2, **dadurch gekennzeichnet, dass** das zumindest eine Zentrier- und Drehelement (46a,b) durch Reibschluss mit der äußeren Oberfläche (50) des Lebensmittel (23) oder der Auflagefläche (22) in Eingriff bringbar ist.

4. Vorrichtung nach einem der Ansprüche 1 bis 3, **dadurch gekennzeichnet, dass** das zumindest eine Zentrier- und Drehelement (46) ein flexibles längliches Element (47a,b) aufweist, das vorzugsweise undehnbar ausgebildet ist.

5. Vorrichtung nach einem der Ansprüche 1 bis 4, **dadurch gekennzeichnet, dass** die Zentrier- und Drehvorrichtung (44) zwei Zentrier- und Drehelemente (46a,b) aufweist, die als Endlosantriebsbänder (48a,b) ausgebildet und in gegenläufigen Umlaufrichtungen bewegbar sind.

6. Vorrichtung nach Anspruch 5, **dadurch gekennzeichnet, dass** die zwei Endlosantriebsbänder (48a,b) in Umfangsrichtung des Lebensmittels (23) gesehen um etwa 180° versetzt angeordnet sind.

7. Vorrichtung nach einem der Ansprüche 1 bis 6, **dadurch gekennzeichnet, dass** die Zentrier- und Drehvorrichtung (44) Spann- und Umlenkelemente (54a-h) zum Spannen und Umlenken des zumindest einen Zentrier- und Drehelements (64a,b) aufweist.

8. Vorrichtung nach Anspruch 7, **dadurch gekennzeichnet, dass** die Spann- und Umlenkelemente (54a-h) Rollen (58a-h) aufweisen, von denen zumindest eine in Drehung versetzbar ist.

9. Vorrichtung nach Anspruch 8, **dadurch gekennzeichnet, dass** erste Rollen (58a,d,e,h) der Spann- und Umlenkelemente (54a-h) benachbart zur äußeren Oberfläche (50) des Lebensmittels (23) oder der Auflagefläche (22) und um 180° versetzt zueinander und zweite Rollen (58b,c,f,g) der Spann- und Umlenkelemente (54a-h) in einem geeigneten Abstand zu den ersten Rollen (58a,d,e,h) anordbar sind.

10. Vorrichtung nach einem der Ansprüche 1 bis 9, **dadurch gekennzeichnet, dass** die Zentrier- und Drehvorrichtung (44) Antriebsmittel (62) zum Bewegen des zumindest einen Zentrier- und Drehelements (46) aufweist.

11. Vorrichtung nach Anspruch 10, **dadurch gekennzeichnet, dass** die Antriebsmittel (62) zumindest eine Antriebsrolle (63a,b) aufweisen, die das zumindest eine Zentrier- und Drehelement (46a,b) antreibt.

12. Vorrichtung nach einem der Ansprüche 1 bis 11, **dadurch gekennzeichnet, dass** die Auflagefläche (22) bezüglich der Drehachse (32), die bezüglich der Auflagefläche (22) mittig verläuft, fest angeordnet ist und das zumindest eine Zentrier- und Drehelement (46a,b) zumindest teilweise an die äußere Oberfläche (50) des Lebensmittels (23) anlegbar und mit ihr in Eingriff bringbar ist.

13. Vorrichtung nach einem der Ansprüche 1 bis 12, **dadurch gekennzeichnet, dass** die Vorrichtung (10) ferner eine Winkelmesseinrichtung (66) zum Erfassen eines Drehwinkels des Lebensmittels (23) bezüglich der Drehachse (32) aufweist.

14. Vorrichtung nach einem der Ansprüche 1 bis 13, **dadurch gekennzeichnet, dass** die Auflagefläche (22) ein Wiegemittel (82) aufweist.

15. Vorrichtung nach einem der Ansprüche 1 bis 14, **dadurch gekennzeichnet, dass** die Schneidvorrichtung (34) einen Schneiddraht (36) aufweist, der von der Drehachse (32) aus gesehen in radialer Richtung bewegbar ist.

16. Vorrichtung nach einem der Ansprüche 1 bis 14, **dadurch gekennzeichnet, dass** die Schneidvorrichtung (34) einen mit Ultraschall beaufschlagbaren Schneider aufweist, der von der Drehachse (32) aus gesehen in radialer Richtung bewegbar ist.

17. Vorrichtung nach Anspruch 8 und einem der Ansprüche 1 bis 16, **dadurch gekennzeichnet, dass** die zur Schneidvorrichtung (34) benachbarten Rollen (58d,h) der Spann- und Umlenkelemente (54a-h) derart voneinander beabstandet sind, dass die Schneidvorrichtung (34) zwischen diesen Rollen (58d,h) bewegbar ist.

18. Vorrichtung nach einem der Ansprüche 1 bis 17, **dadurch gekennzeichnet, dass** die Auflagefläche (22) zumindest einen radial nach außen verlaufenden Schlitz aufweist, entlang dessen die Schneidvorrichtung (34) bewegbar ist.

19. Vorrichtung nach einem der Ansprüche 1 bis 18, **dadurch gekennzeichnet, dass** die Vorrichtung (10) ferner ein Ausstechmittel (72) zum Entfernen eines Lebensmittelanteils (74) aufweist, der um die Drehachse (32) angeordnet ist.

## Claims

1. An apparatus for cutting food, in particular for cutting cheese (24), comprising a supporting area (22) onto which at least one food (23) can be put, a cutting device (34) for cutting the food (23) into portioned pieces, and means for centering the food (23), **characterized by** a centering and rotating device (44), which has at least one centering and rotating element (46a,b) which is configured such that it can be at least partially placed against an outer surface of the food (23) or of the supporting area (22) and can be engaged therewith, in order to center the food (23) and to rotate same about a rotation axis (32) in stepwise manner.

2. The apparatus of claim 1, **characterized in that** the at least one centering and rotating element (46a,b) can be engaged with the outer surface (50) of the food (23) or of the supporting area (22) by positive locking.

3. The apparatus of claim 1 or 2, **characterized in that** the at least one centering and rotating element (46a,b) can be frictionally engaged with the outer surface (50) of the food (23) or of the supporting area (22).

4. The apparatus of any one of claims 1 through 3, **characterized in that** the at least one centering and rotating element (46) has a flexible elongated element (47a,b), which is preferably configured to be inductile.

5. The apparatus of any one of claims 1 through 4, **characterized in that** the centering and rotating device (44) has two centering and rotating elements (46a,b), which are configured as endless driving belts (48a,b) and are movable in opposite directions of revolution.

6. The apparatus of claim 5, **characterized in that** the two endless driving belts (48a,b) are arranged opposite by about 180° seen in circumferential direction of the food (23).

7. The apparatus of any one of claims 1 through 6, **characterized in that** the centering and rotating device (44) has tensioning and deflection elements (54a-h) for tensioning and deflecting the at least one centering and rotating element (64a,b).

8. The apparatus of claim 7, **characterized in that** the tensioning and deflection elements 54a-h) have pulleys (58a-h), at least one of which is rotatable.

9. The apparatus of claim 8, **characterized in that** first pulleys (58a,d,e,h) of the tensioning and deflection elements (54a-h) can be arranged adjacent to the outer surface (50) of the food (23) or of the supporting area (22) and offset with respect to one another by 180° and second pulleys (58b,c,f,g) of the tensioning and deflection elements (54a-h) can be arranged in an appropriate distance to the first pulleys (58a,d,e,h).

10. The apparatus of any one of claims 1 through 9, **characterized in that** the centering and rotating device (44) has driving means (62) for moving the at least one centering and rotating element (46).

11. The apparatus of claim 10, **characterized in that** the driving means (62) have at least one driving roller (63a,b) which drives the at least one centering and rotating element (46a,b).

12. The apparatus of any one of claims 1 through 11, **characterized in that** the supporting area (22) is fixed with respect to the rotating axis (32) which runs centrically with respect to the supporting area (22), and the at least one centering and rotating element (46a,b) can be at least partially placed against the outer surface (50) of the food (23) and can be engaged therewith.

13. The apparatus of any one of claims 1 through 12, **characterized in that** the apparatus (10) further comprises an angle measuring device (66) for acquiring a rotating angle of the food (23) with respect to the rotating axis (32).

14. The apparatus of any one of claims 1 through 13, **characterized in that** the supporting area (22) has a weighing means (82).

15. The apparatus of any one of claims 1 through 14, **characterized in that** the cutting device (34) has a cutting wire (36) which can be moved in radial direction seen from the rotating axis (32).

16. The apparatus of any one of claims 1 through 14, **characterized in that** the cutting device (34) has a cutter suppliable with ultrasound, which is movable in radial direction seen from the rotation axis (32).

17. The apparatus of claim 8 and any one of claims 1 through 16, **characterized in that** the pulleys (58d,h) of the tensioning and deflection elements (54a-h) which are adjacent to the cutting device (34), are spaced from one another such that the cutting device (34) is movable between these pulleys (58d,h).

18. The apparatus of any one of claims 1 through 17, **characterized in that** the supporting area (22) has at least one slot running radially outwardly, along which the cutting device (34) is movable.

19. The apparatus of any one of claims 1 through 18, **characterized in that** the apparatus (10) further comprises a coring means (72) for removing a portion (74) of the food which is arranged around the rotation axis (32).

## Revendications

1. Dispositif de coupe de produits alimentaires, en particulier de coupe de fromage (24), avec une surface d'appui (22), sur laquelle peut être posé au moins un produit alimentaire (23), avec un dispositif de coupe (34) servant à couper le produit alimentaire (23) en portions et avec des moyens de centrage du produit alimentaire (23), **caractérisé par** un dispositif de centrage et de rotation (44), qui présente au moins un élément de centrage et de rotation (46a, b), qui est réalisé de telle sorte qu'il peut s'appliquer au moins en partie contre une surface extérieure (50) du produit alimentaire (23) ou de la surface d'appui (22) et peut être mis en prise avec celle-ci pour centrer le produit alimentaire (23) et le faire tourner pas à pas autour d'un axe de rotation (32).

2. Dispositif selon la revendication 1, **caractérisé en ce que** l'au moins un élément de centrage et de rotation (46a, b) peut être amené en prise avec la surface extérieure (50) du produit alimentaire (23) ou de la surface d'appui (22) par correspondance de forme.

3. Dispositif selon la revendication 1 ou 2, **caractérisé en ce que** l'au moins un élément de centrage et de rotation (46a, b) peut être amené en prise avec la surface extérieure (50) du produit alimentaire (23) ou de la surface d'appui (22) par friction.

4. Dispositif de coupe selon l'une quelconque des revendications 1 à 3, **caractérisé en ce que** l'au moins un élément de centrage et de rotation (46) présente un élément (47a, b) allongé flexible, qui est réalisé de préférence de manière inextensible.

5. Dispositif selon l'une quelconque des revendications 1 à 4, **caractérisé en ce que** le dispositif de centrage et de rotation (44) présente deux éléments de centrage et de rotation (46a, b), qui sont réalisés sous forme de bandes d'entraînement sans fin (48a, b) et peuvent être déplacés dans des sens de rotation opposés.

6. Dispositif selon la revendication 5, **caractérisé en ce que** les deux bandes d'entraînement sans fin (48a, b) sont disposées de manière décalée d'environ 180° vu dans le sens périphérique du produit alimentaire (23).

7. Dispositif selon l'une quelconque des revendications 1 à 6, **caractérisé en ce que** le dispositif de centrage et de rotation (44) présente des éléments de tension et de déviation (54a-h) servant à tendre et à dévier l'au moins un élément de centrage et de rotation (64a, b).

8. Dispositif selon la revendication 7, **caractérisé en ce que** les éléments de serrage et de déviation (54a-h) présentent des galets (58a-h), dont au moins un peut être mis en rotation.

9. Dispositif selon la revendication 8, **caractérisé en ce que** des premiers galets (58a, d, e, h) des éléments de serrage et de déviation (54a-h) peuvent être disposés de manière adjacente à la surface extérieure (50) du produit alimentaire (23) ou de la surface d'appui (22) et de manière décalée de 180° l'un par rapport à l'autre et des deuxièmes galets (58b, c, f, g) des éléments de serrage et de déviation (54a-h) peuvent être disposés à une distance adaptée par rapport aux premiers galets (58a, d, e, h).

10. Dispositif selon l'une quelconque des revendications 1 à 9, **caractérisé en ce que** le dispositif de centrage et de rotation (44) présente des moyens d'entraînement (62) servant à déplacer l'au moins un élément de centrage et de rotation (46).

11. Dispositif selon la revendication 10, **caractérisé en ce que** les moyens d'entraînement (62) présentent au moins un galet d'entraînement (63a, b) qui entraîne l'au moins un élément de centrage et de rotation (46a, b).

12. Dispositif selon l'une quelconque des revendications 1 à 11, **caractérisé en ce que** la surface d'appui (22) est disposée solidement par rapport à l'axe de rotation (32), qui s'étend au milieu par rapport à la surface d'appui (22), et l'au moins un élément de centrage et de rotation (46a, b) peut s'appliquer au moins en partie contre la surface extérieure (50) du produit alimentaire (23) et être mis en prise avec celle-ci.

13. Dispositif selon l'une quelconque des revendications 1 à 12, **caractérisé en ce que** le dispositif (10) présente en outre un dispositif de mesure d'angle (66) pour le relevé d'un angle de rotation du produit alimentaire (23) par rapport à l'axe de rotation (32).

14. Dispositif selon l'une quelconque des revendications 1 à 13, **caractérisé en ce que** la surface d'appui (22) présente un moyen de pesage (82).

15. Dispositif selon l'une quelconque des revendications 1 à 14, **caractérisé en ce que** le dispositif de coupe (34) présente un fil de coupe (36), qui peut être déplacé dans le sens radial vu de l'axe de rotation (32).

16. Dispositif selon l'une quelconque des revendications 1 à 14, **caractérisé en ce que** le dispositif de coupe (34) présente un élément de coupe pouvant être soumis aux ultrasons, qui peut être déplacé dans le sens radial vu de l'axe de rotation (32).

17. Dispositif selon la revendication 8 et l'une quelconque des revendications 1 à 16, **caractérisé en ce que** les galets (58d, h) adjacents au dispositif de coupe (34) des éléments de serrage et de déviation (54a-h) sont espacés les uns des autres de telle sorte que le dispositif de coupe (34) peut être déplacé entre ces galets (58d, h).

18. Dispositif selon l'une quelconque des revendications 1 à 17, **caractérisé en ce que** la surface d'appui (22) présente au moins une fente s'étendant radialement vers l'extérieur le long de laquelle le dispositif de coupe (34) peut être déplacé.

19. Dispositif selon l'une quelconque des revendications 1 à 18, **caractérisé en ce que** le dispositif (10) présente en outre un moyen de découpe (72) servant à retirer une part de produit alimentaire (74), qui est disposé autour de l'axe de rotation (32).
